# EUROPEAN PATENT SPECIFICATION

(11) **EP 3 094 827 B1**
(45) Date of publication and mention of the grant of the patent: **01.11.2017**
(21) Application number: 14703105.8
(22) Date of filing: 17.01.2014
(51) Int. Cl.: F01D 25/04, F02B 39/00, F01D 15/10, F02C 6/12

(54) **AN ARRANGEMENT FOR DAMPING VIBRATION ATTACHABLE TO A TURBOCHARGED INTERNAL COMBUSTION ENGINE AND A TURBOCHARGER UNIT FOR AN INTERNAL COMBUSTION PISTON ENGINE PROVIDED WITH AN ARRANGEMENT FOR DAMPING VIBRATION**
ANORDNUNG ZUR SCHWINGUNGSDÄMPFUNG AN EINER TURBOAUFGELADENEN BRENNKRAFTMASCHINE UND TURBOLADER FÜR EINE HUBKOLBENBRENNKRAFTMASCHINE MIT EINER ANORDNUNG ZUR SCHWINGUNGSDÄMPFUNG
AGENCEMENT D'AMORTISSEMENT DES VIBRATIONS POUVANT ÊTRE FIXÉ À UN MOTEUR À COMBUSTION INTERNE TURBOCOMPRESSÉ ET UNITÉ À TURBOCOMPRESSEUR POUR MOTEUR À PISTON À COMBUSTION INTERNE POSSÉDANT UN AGENCEMENT D'AMORTISSEMENT DES VIBRATIONS

(43) Date of publication of application: 23.11.2016
(73) Proprietor: Wärtsilä Finland Oy, 65380 Vaasa (FI)
(72) Inventor: ALMERIGOGNA, Moreno, I-34018 San Dorligo della Valle (IT); HAUSER, Ugo, I-34018 San Dorligo della Valle (IT); PETTIROSSO, Alan, I-34018 San Dorligo della Valle (IT); PESTELLI, Carlo, I-34018 San Dorligo della Valle (IT)
(74) Representative: Genip Oy
(86) International application number: PCT/FI2014/050038
(87) International publication number: WO 2015/107259

(56) References cited:
- EP-A2- 1 098 069
- DE-A1-102012 024 870
- DE-U1- 9 307 059
- US-B2- 7 900 449
- US-B2- 7 997 857

## Description

### Technical field

The present invention relates to an arrangement for damping vibration attachable to a turbocharged internal combustion engine, the arrangement comprising a housing enclosing at least one cavity and a removable cover part for accessing into the cavity and fill material located in the at least one cavity according to the preamble of claim 1.

Invention relates also to a turbocharger unit for an internal combustion piston engine provided with an arrangement for damping vibration.

### Background art

Internal combustion piston engines are susceptible to vibrations inherently. It is also known that various systems, such as a turbocharger, comprised in an internal combustion engine, depending on their installation site, have natural structural frequencies which are excited by the ignition frequency of the engine and/or multiples of the engine rpm. If the resonance frequency of such a system, like turbocharger, is in the operating range of the engine, the engine with the turbocharger may vibrate unduly strongly.

In order to meet the high demands of final customers and classification societies, certain vibration boundary values on the engine block and exhaust gas turbocharger should be maintained.

In US 7900449 there is disclosed a vibration suppressor and a vibration damper configured in a system consisting of an internal combustion engine and an exhaust-gas turbo charger including a filter muffler, a compressor wheel mounted on one end of a shaft, a turbine wheel mounted on another end of the shaft, a gas inlet and a gas outlet; and a device for reducing vibrations of the system, wherein the device for reducing vibrations comprises a vibration suppressor including a fill material located in a housing cavity. Such a vibration suppressor may by mounted on the filter muffler of the turbocharger also.

Document US 7997857 discloses a turbocharger with a housing with cavities, which are filled with bulk materials. The hollow space is limited by a hollow space closure, which is openable for pouring the bulk materials into the hollow space and is re-closeable.

Using loose particles as the filling material may increase a risk of failure in the turbocharger and other surrounding equipment in case the cavities should fail to withhold the material.

An object of the invention is to provide an arrangement for damping vibration in a turbocharged internal combustion engine by means of which arrangement the operational safety is considerably improved compared to the prior art solutions.

### Disclosure of the Invention

Object of the invention can be met substantially as is disclosed in the independent claims and in the other claims describing more details of different embodiments of the invention.

According to the invention an arrangement for damping vibration attached to a turbocharged internal combustion engine comprises a housing enclosing at least one cavity and a removable cover part for accessing into the cavity and fill material located in the at least one cavity. The arrangement further comprises a removable container arranged in the at least none cavity and said fill material is arranged inside the container such that when the engine is vibrating, the arrangement attached to it is excited and the fill material inside the container is self-colliding, which reduces the vibration of the engine.

This provides an effect of increasing operational safety of the arrangement due to the fact that the fill material is enclosed in sealed manner in the removably arranged containers. This provides also a fast and safe manner to adjust the attenuating properties of the arrangement even later by simply replacing one or more containers of the arrangement with containers having different attenuating properties.

According to an embodiment of the invention the fill material is permanently sealed into the container.

According to an embodiment of the invention volume of the container substantially equals the volume of the cavity.

According to an embodiment of the invention the arrangement comprises more than one cavity and each of the cavities is provided with the container having fill material therein.

According to an embodiment of the invention at least two of the cavities are of different damping characteristics.

According to an embodiment of the invention least two of the cavities are of different sizes.

According to an embodiment of the invention at least two of the cavities are provided with different amount of fill material.

According to an embodiment of the invention at least two of the cavities are provided with different fill material.

According to an embodiment of the invention the container is a flexible container. The flexible material of the container positively contributes to the damping. During engine operation the fill material collide against itself and also against the container and the flexible container can collide against the cavity walls too, so as to amplify the damping effect.

According to another embodiment of the invention the container is a hard container.

It is possible to provide a combination of above mentioned differences.

Container is advantageously arranged to fit into the cavity such that it is substantially immovable in the cavity when operated and assembled into the cavity.

Object of the invention are also met by a turbocharger unit for an internal combustion piston engine provided with an arrangement for damping vibration according to anyone of the claims 1-9.

According to the embodiment of the invention the turbocharger unit is provided with an air filter-muffler and that the arrangement for damping vibration is arranged in connection with the air filter-muffler.

According to another embodiment of the invention the filter muffler comprises a first and a second opposite end walls arranged at a distance from each other and that the arrangement for damping vibration is attached to the second wall.

According to another embodiment of the invention the filter muffler comprises a first and a second opposite end walls arranged at a distance from each other and first and the second end walls are provided with an air passage so that the air may flow through first wall into the filter muffler and into the compressor part, and the arrangement for damping vibration is attached to the second wall and it is provided with an opening forming a part of the air passage.

When the engine or the turbocharger is vibrating, the arrangement attached to it is excited and the fill material inside the container is self-colliding, which reduces the vibration of the turbo charger.

The arrangement is advantageously provided with such a fixing system that does not require any modifications on engine components or equipment. It can be mounted on the engine component that has high vibration levels, and practically no dismounting operation is needed.

The arrangement may be installed during any assembly or testing phase of the engine, or during operation on field, if needed.

Due to the separate containers, in case of housing failure, the casings prevent the risk of spread of fill material, safeguarding the adjacent machineries operation. As an example, if any fill material should penetrate into compressor wheel during operation, it can cause the failure or the destruction of the machinery.

The arrangement is flexible on the quantities of the fill material such as sand or other bulk material to use, and it is very simple to change the material and the quantities needed. The arrangement provides also a fine tuning capability performed changing the fill material and/or its quantities, during engine operation also.

### Brief Description of Drawings

In the following, the invention will be described with reference to the accompanying exemplary, schematic drawings, in which
Figure 1 illustrates a turbocharger unit to which an arrangement for damping vibrations according to an embodiment of the invention has been attached,
Figure 2 illustrates an arrangement for damping vibrations according to another embodiment of the invention,
Figure 3 illustrated a container according to an embodiment of the invention, and
Figure 4 illustrates a turbocharger unit to which an arrangement for damping vibrations according to another embodiment of the invention has been attached.

### Detailed Description of Drawings

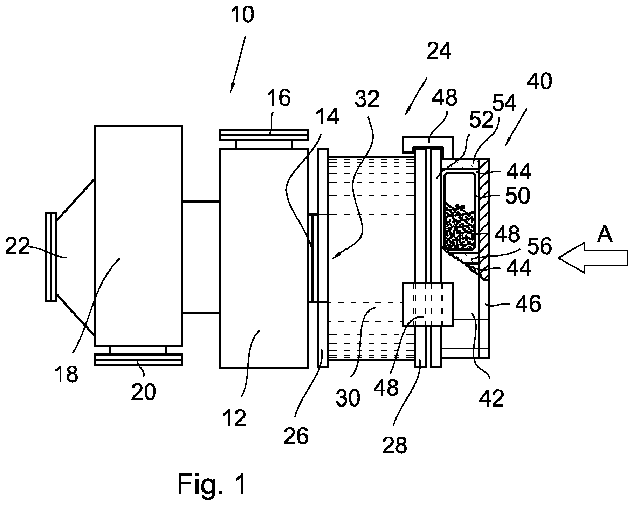

Figure 1 depicts schematically a turbocharger unit 10 which may be installed in an internal combustion engine. The turbocharger unit 10 comprises a compressor part 12 and a turbine part 18. The compressor part has a gas inlet 14 and a gas outlet 16, and the turbine part 18 has gas inlet 20 and a gas outlet 22. The turbine part (turbine wheel, not shown) and the compressor part (compressor wheel, not shown) are mechanically connected by a shaft (not shown) so that the turbine wheel is arranged to rotate the compressor wheel. The turbocharger unit is provided with an inlet air filter-muffler 24 through which the air to be compressed in the compressor part is arranged to flow. In this application the term filter-muffler means a device which is to at least some extent capable of removing impurities from the gas at additionally or alternatively attenuate noise from the compressor part.

In the embodiment of figure 1 the filter-muffler 24 comprises a first and a second opposite end walls 26, 28 which are arranged parallel at a distance from each other. Between the walls 26, 28 has been arranged an air permeable filter-muffler element 30. The filter-muffler element 30 is annularly arranged to circumscribe the rim of the end walls and having a thickness which defines the distance between the walls 26,28. The first end wall 26 comprises attaching means for attaching the filter-muffler 24 in connection with the air inlet of the compressor part 12. The first end wall 26 is provided with an air passage 32 so that the air, which has flown through the filter-muffler element 30 into the filter-muffler 24, may flow through the air passage 32 out from the filter muffler 24. Here the filter-muffler 24 is provided with an arrangement for damping vibration 40 attached to the second wall 28 opposite to the first wall 26 having the air passage 32. The arrangement for damping vibration 40 is removably attached to the filter-muffler 24 by suitable clamps 48 or alike at the rim of the first end wall 26.

The arrangement for damping vibration 40, which may be also denoted as "the arrangement", comprises a housing 42 which encloses at least one cavity 44 therein. In the figure 1 there is shown two cavities 44. The arrangement 40 also comprises a removable cover part 46 covering the cavity/cavities 48. The cover part 46 has been arranged for accessing into the cavity / cavities 44. In the arrangement 40 there is fill material 48 i.e. particles located in the at least one cavity 44. The fill material is located so that the arrangement 40 comprises a container 50 arranged in the cavity 44 and said fill material 48 is arranged closed inside the container 50.

The container 50 is closed so that the fill material is permanently sealed into the container 50. In this connection permanently means that the fill material may not come out from the container 50 without breaking or unsealing the container 50. The container may be manufactured of suitable flexible material polyethylene, provided optionally with reinforcing structure, like suitable fibres or fibre fabric. According to an embodiment the container may be manufacture of a very thin metal, such as steel e.g. by laser welding.

The fill material (one or a combination of) may be selected from a nonexclusive group of following materials: liquid, sand, granulates of suitable solid material like metal, rubber, glass etc. The fill material inside the flexible container can be of various type. Liquid-proof material should be used if liquid is in use.

The volume and shape of the container 50 substantially equals the volume and shape of the cavity 44 such that the cavity 44 may be substantially filled with the container 50. It is advantageous that the container, particularly when flexible material is used, is arranged to retain its walls unwrinkled when assembled into the cavity to minimize excessive wearing caused by the fill material moving in the container.

When the arrangement comprises more than one cavity, each of the cavities is preferably provided with the container 50 having fill material 48 therein. The container 50 can be totally or only partially filled with the fill material 48.

Since the fill material is sealed into the container 50 the tightness requirement of the cavity 44 and its cover part 46 is not necessarily very high, but as minimum requirement the container must remain in the cavity in all circumstances. At least no special sealing is needed in the cover part 46.

In embodiment shown in the figure 1 the arrangement for damping vibration 40 comprises a bottom part 52 which is a circular plate-like structure. The arrangement 40 comprises a circular side wall 54 circumscribing the rim of the bottom part 52 and the cover part 46 is also a circular plate arranged to cover the area inside the circular side wall 54. The arrangement comprises also an internal intermediate wall 56 which divides two adjacent cavities 44.

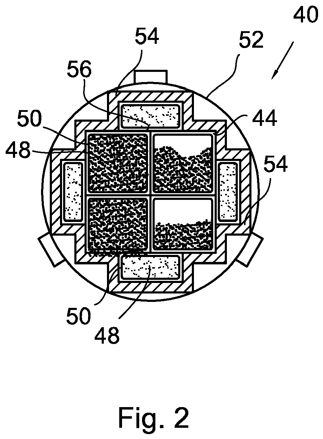

In figure 2 there is shown an embodiment of the arrangement for damping vibration 40 cut out on the plane of the bottom part 52 at a distance from the bottom plate 52, seen in the direction depicted by an arrow A in the embodiment of figure 1. In the figure 2 same reference numbers have been used for same or corresponding parts of the arrangement 40 as in figure 1. In the embodiment shown in figure 2 the side wall 54 is not of circular form but is formed such that multiple rectangular cavities may be formed by suitably arranged intermediate walls 54. In this embodiment all two sizes of containers 50 used, four square shape in the middle and four rectangular shaped containers 50.

This way there are two sets of the cavities which are of different damping characteristics. It is also shown that the at least two of the cavities 50 are of different sizes. Also the rectangular cavities having the rectangular shaped containers 50 are filled with different fill material 48. Also two of the cavities are provided with different amount of fill material 48.

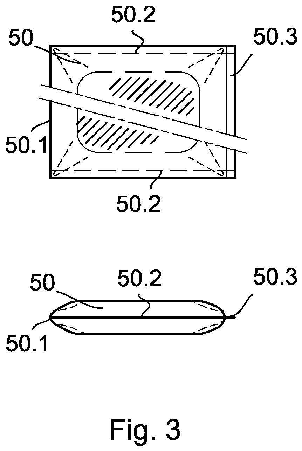

In figure 3 there is shown top (upper) and a side (lower) view of a container 50 according to an embodiment of the invention. The container is manufactured from polyethylene, provided optionally with reinforcing structure, like suitable fibres or fibre fabric. The container 50 is formed of an elongated piece of the material folded at one edge 50.1. Two opposite sides 50.2 are provided with inside fold with a stitching. After the container is filled with the fill material the side 50.3 opposite to the folded side 50.1 is provided with outside stitching.

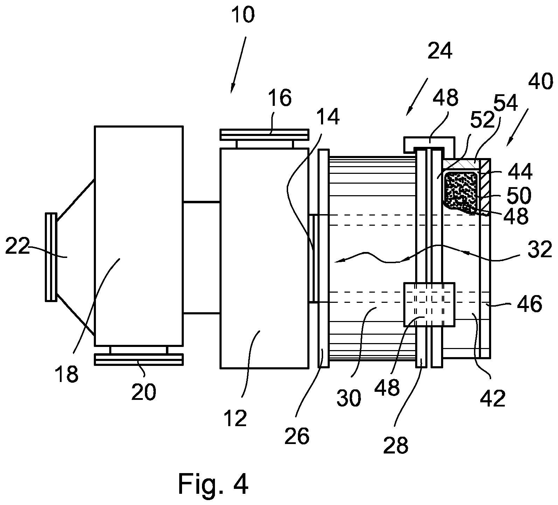

In figure 4 there is shown a turbocharger unit 10 like in figure 1. In this embodiment the filter-muffler 24 comprises a first and a second opposite end walls 26, 28 which are arranged parallel at a distance from each other. Bother the end wall are provided with and opening for the air. Between the walls 26, 28 has been arranged an air permeable filter-muffler element 30. The filter-muffler element 30 is annularly arranged to circumscribe the rim of the end walls and having a thickness which defines the distance between the walls 26, 28. The first end wall 26 comprises attaching means for attaching the filter-muffler 24 in connection with the air inlet of the compressor part 12. The first and the second wall 26, 28 is provided with an air passage 32 so that the air, which has flown opening in the second wall into the filter-muffler 24, may flow through the air passage 32 into the compressor part out from the filter muffler 24. Here the filter-muffler 24 is provided with an arrangement for damping vibration 40 attached to the second wall 28. The arrangement for damping vibration 40 is in this embodiment provided with an opening forming a part of the air passage 32. The arrangement 40 is also removably attached to the filter-muffler 24 by suitable clamps 48 or alike at the rim of the first end wall 26.

The arrangement for damping vibration 40, which may be also denoted as "the arrangement", is otherwise similar or corresponding to that shown in figure 1.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

## Claims

1. An arrangement for damping vibration (40) attached to a turbocharged internal combustion engine, the arrangement comprising a housing (42) enclosing at least one cavity (44) and a removable cover part (46) for accessing into the cavity (44) and fill material (48) located in the at least one cavity (44), **characterized in that** the arrangement comprises a removable container (50) arranged in the at least one cavity (44) and that said fill material (48) is arranged inside the container (50) such that when the engine is vibrating, the arrangement attached to it is excited and the fill material inside the container is self-colliding, which reduces the vibration of the engine.

2. An arrangement according to claim 1, **characterized in that** the fill material (48) is permanently sealed into the container (50).

3. An arrangement according to claim 1, **characterized in that** volume of the container (50) substantially equals the volume of the cavity (44).

4. An arrangement according to claim 1, **characterized in that** the arrangement comprises more than one cavity (44) and each of the cavities is provided with the container (50) having fill material therein.

5. An arrangement according to claim 1, **characterized in that** at least two of the cavities (44) are of different damping characteristics.

6. An arrangement according to claim 5, **characterized in that** at least two of the cavities (44) are of different sizes.

7. An arrangement according to claim 1 or 6, **characterized in that** at least two of the cavities (44) are provided with different amount of fill material (48).

8. An arrangement according to claim 1 or 6 or 7, **characterized in that** at least two of the cavities (44) are provided with different fill material (48).

9. An arrangement according to claim 1, **characterized in that** the container is a flexible container (50).

10. A turbocharger unit (10) for an internal combustion piston engine, provided with an arrangement for damping vibration (40), the arrangement comprising a housing (42) enclosing at least one cavity (44) and a removable cover part (46) for accessing into the cavity (44) and fill material (48) located in the at least one cavity (44), **characterized in that** the arrangement comprises a removable container (50) arranged in the at least one cavity (44) and that said fill material (48) is arranged inside the container (50).

11. A turbocharger unit according to claim 10, **characterized in that** the turbocharger unit (10) is provided with an air filter-muffler (24) and that the arrangement for damping vibration is arranged in connection with the air filter-muffler (24).

12. A turbocharger unit according to claim 11, **characterized in that** filter muffler comprises a first and a second opposite end walls (26, 28) arranged at a distance from each other and that first one of the end walls is provided with an air passage (36) so that the air may flow through the filter muffler into the compressor part, and that the arrangement for damping vibration is attached to the second wall (28).

13. A turbocharger unit according to claim 11, **characterized in that** the filter muffler comprises a first and a second opposite end walls (26, 28) arranged at a distance from each other and that first and the second end walls (26,28) are provided with an air passage (36) so that the air may flow through first wall (26) into the filter muffler and into the compressor part, and that the arrangement for damping vibration is attached to the second wall (28) and it is provided with an opening forming a part of the air passage (32).

## Patentansprüche

1. Anordnung zur Dämpfung von Vibration (40), die an einem turboaufgeladenen Verbrennungsmotor angebracht ist, die Anordnung umfassend ein Gehäuse (42), das mindestens einen Hohlraum (44) umgibt, und ein entfernbares Abdeckteil (46) für den Zugang zu dem Hohlraum (44) und Füllmaterial (48), das in dem mindestens einen Hohlraum (44) befindlich ist.**dadurch gekennzeichnet, dass** die Anordnung einen entfernbaren Behälter (50) umfasst, der in dem mindestens einen Hohlraum (44) angeordnet ist, und dadurch, dass das Füllmaterial (48) innerhalb des Behälters (50) derart angeordnet ist, dass bei Vibrieren des Motors die Anordnung, die daran angebracht ist, erregt wird und das Füllmaterial innerhalb des Behälters selbstkollidierend ist, was die Vibration des Motors verringert.

2. Anordnung nach Anspruch 1, **dadurch gekennzeichnet, dass** das Füllmaterial (48) dauerhaft in den Behälter (50) eingeschlossen ist.

3. Anordnung nach Anspruch 1, **dadurch gekennzeichnet, dass** Volumen des Behälters (50) im Wesentlichen gleich dem Volumen des Hohlraums (44) ist.

4. Anordnung nach Anspruch 1, **dadurch gekennzeichnet, dass** die Anordnung mehr als einen Hohlraum (44) umfasst und jeder der Hohlräume mit dem Behälter (50) versehen ist, der das Füllmaterial darin aufweist.

5. Anordnung nach Anspruch 1, **dadurch gekennzeichnet, dass** mindestens zwei der Hohlräume (44) verschiedene Dämpfungseigenschaften aufweisen.

6. Anordnung nach Anspruch 5, **dadurch gekennzeichnet, dass** mindestens zwei der Hohlräume (44) verschiedene Größen aufweisen.

7. Anordnung nach Anspruch 1 oder 6, **dadurch gekennzeichnet, dass** mindestens zwei der Hohlräume (44) mit unterschiedlicher Menge von Füllmaterial (48) versehen sind.

8. Anordnung nach Anspruch 1 oder 6 oder 7, **dadurch gekennzeichnet, dass** mindestens zwei der Hohlräume (44) mit unterschiedlichem Füllmaterial (48) versehen sind.

9. Anordnung nach Anspruch 1, **dadurch gekennzeichnet, dass** der Behälter ein flexibler Behälter (50) ist.

10. Turboladereinheit (10) für einen Kolbenverbrennungsmotor, die mit einer Anordnung zur Dämpfung von Vibration (40) versehen ist, die Anordnung umfassend ein Gehäuse (42), das mindestens einen Hohlraum (44) umgibt, und ein entfernbares Abdeckteil (46) für den Zugang zu dem Hohlraum (44) und Füllmaterial (48), das in dem mindestens einen Hohlraum (44) befindlich ist, **dadurch gekennzeichnet, dass** die Anordnung einen entfernbaren Behälter (50) umfasst, der in dem mindestens einen Hohlraum (44) angeordnet ist, und dass das Füllmaterial (48) innerhalb des Behälters (50) angeordnet ist.

11. Turboladereinheit nach Anspruch 10, **dadurch gekennzeichnet, dass** die Turboladereinheit (10) mit einem Luftfilterschalldämpfer (24) versehen ist und dass die Anordnung zur Dämpfung von Vibration in Verbindung mit dem Luftfilterschalldämpfer (24) angeordnet ist.

12. Turboladereinheit nach Anspruch 11, **dadurch gekennzeichnet, dass** Filterschalldämpfer eine erste und eine zweite gegenüberliegende Endwand (26, 28) umfasst, die voneinander beabstandet angeordnet sind, und dass erste der Endwände mit einem Luftdurchlass (36) versehen ist, so dass die Luft durch den Filterschalldämpfer in den Kompressorteil strömen kann und dass die Anordnung zur Dämpfung von Vibration an der zweiten Wand (28) angebracht ist.

13. Turboladereinheit nach Anspruch 11, **dadurch gekennzeichnet, dass** der Filterschalldämpfer eine erste und eine zweite gegenüberliegende Endwand (26, 28) umfasst, die voneinander beabstandet angeordnet sind, und dass erste und die zweite Endwand (26, 28) mit einem Luftdurchlass (36) versehen sind, so dass die Luft durch erste Wand (26) in den Filterschalldämpfer und in den Kompressorteil strömen kann und dass die Anordnung zur Dämpfung von Vibration an der zweiten Wand (28) angebracht ist und mit einer Öffnung versehen ist, die einen Teil des Luftdurchlasses (32) bildet.

## Revendications

1. Agencement pour amortir les vibrations (40) fixé sur un moteur à combustion interne turbocompressé, l'agencement comprenant un logement (42) entourant au moins une cavité (44) et une partie de capot amovible (46) pour accéder à l'intérieur de la cavité (44) et du matériau de remplissage (48) situé dans l'au moins une cavité (44), **caractérisé en ce que** l'agencement comprend un récipient amovible (50) agencé dans l'au moins une cavité (44) et que ledit matériau de remplissage (48) est agencé à l'intérieur du récipient (50) de telle façon que lorsque le moteur vibre, l'agencement fixé dessus est excité et le matériau de remplissage à l'intérieur du récipient s'auto-entrechoque, ce qui réduit la vibration du moteur.

2. Agencement selon la revendication 1, **caractérisé en ce que** le matériau de remplissage (48) est étanchéifié de façon permanente à l'intérieur du récipient (50).

3. Agencement selon la revendication 1, **caractérisé en ce que** le volume du récipient (50) est essentiellement égal au volume de la cavité (44).

4. Agencement selon la revendication 1, **caractérisé en ce que** l'agencement comprend plus d'une cavité (44) et chacune des cavités est dotée du récipient (50) ayant le matériau de remplissage à l'intérieur.

5. Agencement selon la revendication 1, **caractérisé en ce qu'**au moins deux des cavités (44) sont de caractéristiques d'amortissement différentes.

6. Agencement selon la revendication 5, **caractérisé en ce qu'**au moins deux des cavités (44) sont de tailles différentes.

7. Agencement selon la revendication 1 à 6, **caractérisé en ce qu'**au moins deux des cavités (44) sont dotées d'une quantité différente de matériau de remplissage (48).

8. Agencement selon la revendication 1 ou 6 ou 7, **caractérisé en ce qu'**au moins deux des cavités (44) sont dotées de matériau de remplissage (48) différent.

9. Agencement selon la revendication 1, **caractérisé en ce que** le récipient est un récipient flexible (50).

10. Unité de turbocompresseur (10) pour un moteur à pistons à combustion interne, dotée d'un agencement pour amortir la vibration (40), l'agencement comprenant un logement (42) entourant au moins une cavité (44) et une partie de capot amovible (46) pour accéder à l'intérieur de la cavité (44) et du matériau de remplissage (48) situé dans l'au moins une cavité (44), **caractérisé en ce que** l'agencement comprend un récipient amovible (50) agencé dans l'au moins une cavité (44) et que ledit matériau de remplissage (48) est agencé à l'intérieur du récipient (50).

11. Unité de turbocompresseur selon la revendication 10, **caractérisée en ce que** l'unité de turbocompresseur (10) est dotée d'un silencieux-filtre à air (24) et que l'agencement pour amortir la vibration est agencé en connexion avec le silencieux-filtre à air (24).

12. Unité de turbocompresseur selon la revendication 11, **caractérisée en ce que** le silencieux-filtre comprend des première et seconde parois d'extrémité opposées (26, 28) agencées à distance l'une de l'autre et que la première des parois d'extrémité est dotée d'un passage d'air (36) de façon à ce que l'air puisse circuler à travers le silencieux-filtre jusque dans la partie de compresseur, et que l'agencement pour amortir la vibration est fixé sur la seconde paroi (28).

13. Unité de turbocompresseur selon la revendication 11, **caractérisée en ce que** le silencieux-filtre comprend des première et seconde parois d'extrémité opposées (26, 28) agencées à distance l'une de l'autre et que les première et seconde parois d'extrémité (26, 28) sont dotées d'un passage d'air (36) de façon à ce que l'air puisse circuler à travers la première paroi (26) jusque dans le silencieux-filtre et jusque dans la partie de compresseur, et que l'agencement pour amortir la vibration est fixé sur la seconde paroi (28) et est doté d'une ouverture formant une partie du passage d'air (32).
